(19) Europäisches Patentamt

European Patent Office

Office européen des brevets

(11) **EP 1 011 277 A2**

(12) **EUROPEAN PATENT APPLICATION**

(43) Date of publication:
**21.06.2000 Bulletin 2000/25**

(51) Int. Cl.[7]: **H04Q 7/22**, H04Q 7/38, H04L 12/56

(21) Application number: **99124871.7**

(22) Date of filing: **16.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **18.12.1998 JP 36166098**

(71) Applicant:
**Mitsubishi Materials Corporation
Chiyoda-ku, Tokyo 100-004 (JP)**

(72) Inventors:
• **Tari, Kazuyoshi,
Mitsubishi Materials Corporation
Omiya-shi, Saitama 330-0835 (JP)**
• **Unoki, Hiroyuki,
Mitsubishi Materials Corporation
Omiya-shi, Saitama 330-0835 (JP)**
• **Nagira, Tumoru,
Mitsubishi Materials Corporation
Omiya-shi, Saitama 330-0835 (JP)**

(74) Representative: **HOFFMANN - EITLE
Patent- und Rechtsanwälte
Arabellastrasse 4
81925 München (DE)**

(54) **Mobile wireless apparatus and wireless server and recording medium**

(57)     A mobile wireless apparatus (M) establishes a link between a terminal device (5) and the Internet by wirelessly communicating with a base station wireless apparatus (A,B) of a wireless communication apparatus having at least one wireless server (X,Y) connected to the Internet and the base station wireless apparatus (A,B) connected to the wireless server (X,Y) for performing wireless communication, the mobile wireless apparatus (M).

Under a condition in which the mobile wireless apparatus (M) can wirelessly communicate with multiple base station wireless apparatuses (A,B), when the base station wireless apparatus (A,B), which communicated with the mobile wireless apparatus (M), currently communicates with another mobile wireless apparatus, the mobile wireless apparatus (M) wirelessly communicates with another base station wireless apparatus (A,B) obtained by selecting from among a plurality of other base station apparatuses (A,B), which are located in neighboring communication areas of the base station wireless apparatus (A,B) and which have available communication links.

FIG. 2

EP 1 011 277 A2

## Description

The present invention relates to a wireless server, a component of a wireless communication apparatus utilizing a network, such as the Internet, and a mobile wireless apparatus wirelessly communicating with a base station wireless apparatus connected to the wireless server.

A wireless communication apparatus has been proposed by the applicant of the present invention in which a terminal device is allowed to be connected to the Internet using wireless communication (Japanese Patent Publication No. 10-262,099). Features of the wireless communication apparatus are described below.

As a first feature, the wireless communication apparatus includes at least one wireless server, which is connected to the Internet, and a base station wireless apparatus, which is connected to the wireless server and which wirelessly communicates with a mobile wireless apparatus connected to the terminal device. A single one of the wireless servers, which is assigned as a home wireless server, communicates with a mobile wireless apparatus in a service area of the base station wireless communication apparatuses thereof, whereby the terminal device of the mobile wireless apparatus is allowed to access the Internet.

As a second feature, the wireless communication apparatus includes a terminal authentication managing system and a terminal managing system. The terminal authentication managing system authenticates the validity of access of the terminal device to the wireless server in accordance with a registration request from the terminal device and the terminal managing system issues one of the currently available IP addresses and registers the terminal, device for access the Internet in accordance with an Internet Protocol (IP) address issue request from the terminal device.

As a third feature of the wireless communication apparatus, when another wireless server, other than a home wireless server, is requested by a terminal device to register the terminal device, then the other wireless server requests, via the Internet, the home wireless server of the terminal device to authenticate access of the terminal device to the other wireless server as well as to issue an IP address for the terminal device. When authentication and the IP address issue processes result in success, the terminal device is allowed to access the other wireless server.

As a fourth feature of the wireless communication apparatus, the wireless server further includes a routing system in which, when the terminal device is connected to a wireless server other than a home server, and when a previous wireless server of the terminal device receives packet data for the terminal device, the previous wireless server forwards the packet data to the wireless server currently connected to the terminal device based on the IP address obtained from the home wireless server.

As a fifth feature of the wireless communication apparatus, when a terminal device is connected to a wireless server other than a home wireless server, and when the wireless server receives forwarded packet data for the terminal device, a wireless server on the other side of the Internet which sent the packet data is informed of which wireless server is currently connected to the terminal device. Thereafter, the packet data, which is sent to the terminal device, is directly sent to the wireless server without passing through the previous wireless server of the terminal device.

When the terminal device of the mobile wireless apparatus communicates with a base station wireless apparatus, and when the base station wireless apparatus is busy communicating with another mobile wireless apparatus ("busy state"), the mobile wireless apparatus must wait for the "busy state" to be interrupted or terminated. Furthermore, when the mobile wireless apparatus uses other base station wireless apparatuses which are ready for communication, and when the mobile wireless apparatus has no channel information (operating frequencies and the like) of which other base station wireless apparatuses are in the neighborhood of the communication area of the one wirelessly connected to the terminal device, the mobile wireless apparatus must obtain channel information of the neighboring base station wireless apparatuses via the one wirelessly connected thereto.

The present invention has been made to solve the foregoing problems. Accordingly, it is an object of the present invention to provide a mobile wireless apparatus and a wireless server capable of selectively switching among base station wireless apparatuses in accordance with communication traffic. It is another object of the present invention to provide the mobile wireless apparatus and a wireless server capable of obtaining channel information and the like of neighboring other base station wireless apparatuses by utilizing idle time when the mobile wireless apparatus is not engaged in communication.

To this end, according to a first aspect of the invention, there is provided a mobile wireless apparatus for establishing a link between a terminal device and the Internet by wirelessly communicating with a base station wireless apparatus of a wireless communication apparatus having at least one wireless server connected to the Internet and the base station wireless apparatus connected to the wireless server for performing wireless communication, wherein, under a condition in which the mobile wireless apparatus can wirelessly communicate with multiple base station wireless apparatuses, when the base station wireless apparatus, which communicated with the mobile wireless apparatus, currently communicates with another mobile wireless apparatus, the mobile wireless apparatus wirelessly communicates with another base station wireless apparatus obtained by selecting from among a plurality of other base station apparatuses, which are located in neighboring communication areas of the base station wireless apparatus and which have available communication links.

In the mobile wireless apparatus, during idling time thereof, base station information of the neighboring other base station wireless apparatuses may be obtained and stored from packets transmitted from base station wireless apparatuses, thereby selecting the other base station wireless apparatus based on the base station information.

In the mobile wireless apparatus, the mobile wireless apparatus may further include a receiving unit for receiving a wireless signal and outputting the received-data, a PLL unit, connected to the receiving unit, for demodulating the wireless signal, a storage unit storing base station information about base station wireless apparatuses, a received-data analyzing device for analyzing the received-data, a data processing device for extracting the base station information from the analyzed received-data and for storing the base station information in the storage unit and a base station selecting device for synchronously switching settings for the received-data analyzing unit and the PLL unit based on the base station information stored in the storage unit.

According to a second aspect of the invention, there is provided a wireless server for a wireless communication apparatus having at least one wireless server connected to the Internet, and a base station wireless apparatus which is connected to the wireless server and which wirelessly communicates with a mobile wireless apparatus connected to a terminal device, wherein the wireless server causes multiple base station wireless apparatuses, which are connected to the wireless server and, whose communication areas overlap, to synchronously transmit wireless signals having control data at different times.

In the wireless server, when the communication area of the base station wireless apparatus connected to the wireless server overlaps with those of base station wireless apparatuses connected to other wireless servers, the wireless server may cause each base station wireless apparatus to transmit wireless signals having control data at different times by synchronizing with the other wireless servers.

According to a third aspect of the invention, there is provided a computer-readable containing medium containing a base station selecting program for a mobile wireless apparatus, the program causing a computer to execute the steps of; analyzing received-data transmitted from a receiving base station wireless apparatus: extracting and storing base station information from the received-data; and changing a process of analyzing the received-data and the oscillating frequency of a PLL unit in accordance with the receiving base station wireless apparatus based on the base station information.

As described above, in the wireless communication apparatus there is an advantage in that, because the single wireless server is assigned as a home server for the terminal devices where access of a terminal device is authenticated and an IP address is issued, the terminal device can communicate with a wireless server even though the terminal device is out of the communication area of the home server.

Moreover, in the wireless communication apparatus there is another advantage in that, when the terminal device requests a wireless server, which the terminal device currently tries to access, to issue an IP address, even though the wireless server may not be the home wireless server, the home wireless server can issue the IP address via this wireless server. Accordingly, the terminal device can access another wireless server without changing a configuration of the IP address thereof.

In addition, In the wireless communication apparatus there is still another advantage in that, heavy communication traffic can be prevented from occurring because there is no need to inform all wireless servers of the transition of the terminal device whenever the terminal device moves to another communication area.

Waiting time of a mobile wireless apparatus due to heavy communication traffic between mobile wireless apparatuses and base station wireless apparatuses is diminished because the mobile wireless apparatus can select one of the available base station wireless apparatuses under a condition which enables the mobile wireless apparatus to communicate with multiple base station wireless apparatuses.

Because the mobile wireless apparatus obtains, via the base station wireless apparatus wirelessly communicated therewith, base station information of the base station wireless apparatuses in neighboring communication areas during the idling time thereof, the mobile wireless apparatus can quickly perform a selection-switching process based on the obtained base station information.

In the wireless senor of the present invention, the mobile wireless apparatus can receive in a time-division manner control data transmitted from each base station wireless apparatus because each base station wireless server synchronously transmits the control data at a different time.

In addition, because synchronization is performed among multiple wireless servers, each base station wireless apparatus can synchronously transmit the control data at a different time, even though wireless servers connected to each base station wireless server are different.

Fig. 1 is a block diagram showing a construction of a mobile wireless apparatus according to an embodiment of the present invention;
Fig. 2 shows one example in which the mobile wireless apparatus is located in a communication area of multiple base station wireless apparatuses which are connected to the same wireless server;
Fig. 3 shows one example of timing of signals transmitted through transmission channels of multiple base station wireless apparatuses and responses of the mobile wireless apparatus to the signals;

Fig. 4 shows one example in which the mobile wireless apparatus is located in the communication area of the base station wireless apparatus connected to another wireless server;

Fig. 5 shows a block diagram of a wireless communication apparatus according to one embodiment of the present invention:

Fig. 6 illustrates a process of transmitting a packet In the embodiment;

Fig. 7 is a flow chart showing the process of transmitting a packet in the embodiment;

Fig. 8 is a flow chart showing the process of transmitting a packet in the embodiment;

Fig. 9 is the flow chart showing the process of transmitting a packet in the embodiment;

Fig. 10 is the flow chart showing the process of transmitting a packet in the embodiment;

Fig. 11 illustrates a process of issuing an address in the embodiment:

Fig. 12 illustrates a process of authenticating a terminal in the embodiment; and

Fig. 13 illustrates the process of authenticating the terminal in the embodiment.

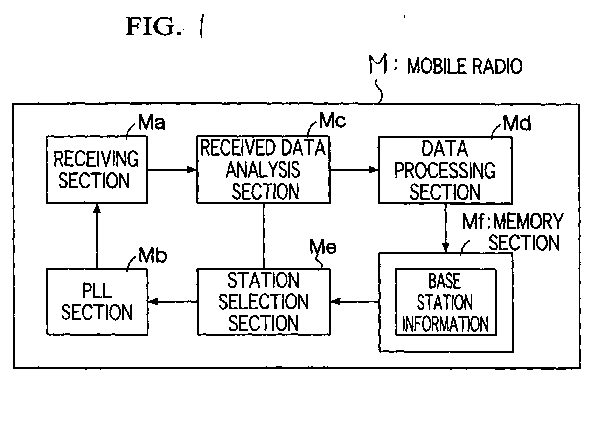

Embodiments of the present invention are described with reference to the accompanying drawings. Fig. 1 is a block diagram showing a construction of a mobile wireless apparatus M according to one embodiment of the present invention. The mobile wireless apparatus M of the present embodiment is employed in the conventional wireless communication apparatus which is described in "Description of the Related Art". Details of the embodiment are described below.

The mobile wireless apparatus M includes a receiving unit $M_a$ for receiving a wireless signal and outputting the received signal; a "phase locked loop" (PLL) unit $M_b$ (including a PLL circuit) connected to the receiving unit $M_a$ demodulating the received signal: a received-data analyzing unit $M_c$ for analyzing the received-data; a data processing unit $M_d$ for extracting and saving, from the analyzed received-data, base station information of base station wireless apparatuses which includes channel information of base station wireless apparatuses (operating frequencies and the like) and communication-link information (availability of communication-links and the like); a base station selecting unit $M_e$ for synchronously switching between the PLL unit $M_b$ and the receiving data analyzing unit $M_c$, based on the base station information: and a storage unit $M_f$ for storing the base station information.

Here, the mobile wireless apparatus is assumed to store channel information of most base station wireless apparatuses in the storage unit $M_f$ before the mobile wireless apparatus moves. In addition, a wireless server, a component of the wireless communication apparatus, has the base station information of all base station wireless apparatuses in the neighborhood of the communication area of the base station wireless apparatuses which the wireless server is responsible for. The base station information is transmitted by way of a transmission channel (down-line channel) from a base station wireless apparatus, a component of the wireless apparatus. The wireless server and the base station wireless apparatus are described in detail below.

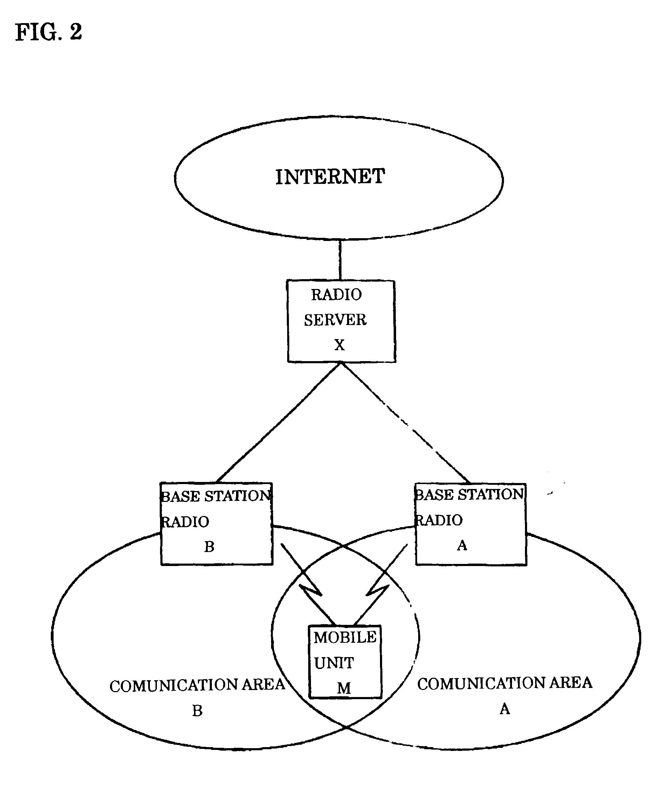

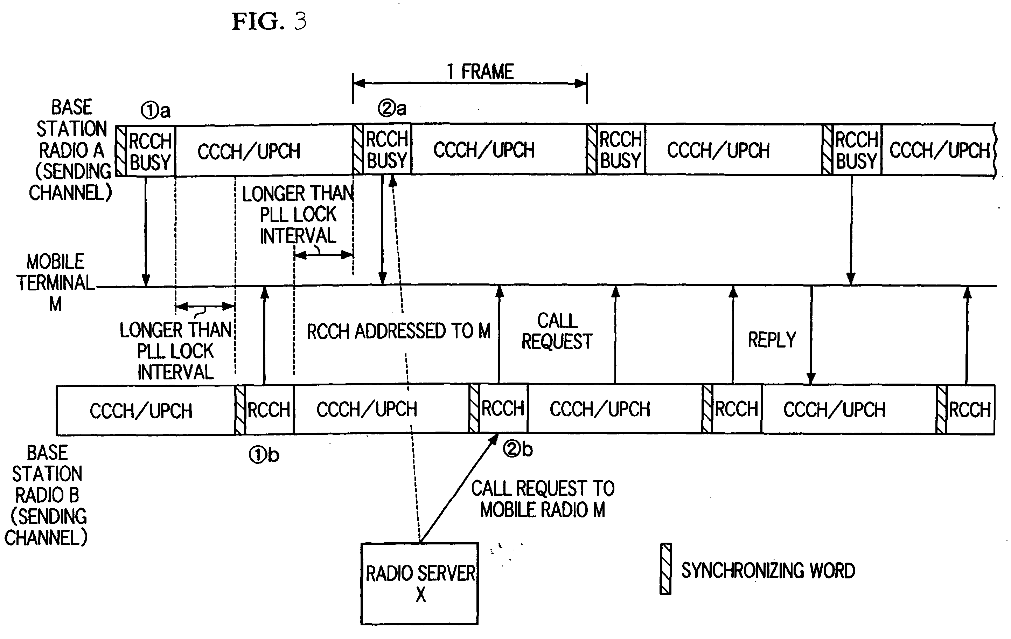

Operations of the mobile wireless apparatus M are described with reference to Figs. 2 and 3. The operations are described particularly in a case in which the mobile wireless apparatus is located in an overlapping region of communication areas A, B, etc for multiple base station wireless apparatuses A, B, etc, respectively, as shown in Fig. 2 (for the sake of simplicity, only base station wireless apparatuses A and B are shown). Fig. 3 shows signals through transmission channels between two base station wireless apparatuses A and B and the mobile wireless apparatus, and also shows transmission timing thereof. Semi-duplex operation is employed in the communication between the base station wireless apparatus and the mobile wireless apparatus. That means the base station wireless apparatus constantly transmits packets using a transmission channel (down-line channel) and the mobile wireless apparatus responds to the packets by using an up-line channel when the destination of the packets is the mobile wireless apparatus.

In each transmission channel of base station wireless apparatuses A and B, data are transmitted sequentially, where a pair of bit streams "unique word (UW) and "radio control channel" (RCCH), and, a following bit stream, i.e. either "common control channel" (CCCH) or "user packet channel" (UPCH) are included as one frame. The UW data is a bit stream in the header of each frame for frame-synchronization, and has a particular value. The RCCH data includes states of communication channels and information designating which mobile wireless apparatus a base station wireless apparatus communicates with, and is transmitted, to all mobile wireless apparatuses. In Fig. 3, "RCCH busy" represents that the destination of a frame having "RCCH busy" is a mobile wireless apparatus other than the mobile wireless apparatus M. The CCCH data includes control information (calling request and the like), channel information of neighboring base station wireless apparatuses, and the like, and is transmitted to at least one mobile wireless apparatus designated by the RCCH data. The UPCH data includes data to be transmitted to a mobile wireless apparatus, and is transmitted to at least one mobile wireless apparatus designated by the RCCH data.

A wireless server X controls the base station wireless apparatuses A and B so that a predetermined period (at least the locked time of the PLL unit $M_b$) of data transmission time lag occurs between base station wireless apparatuses A and B. In Fig. 3, the base station selecting unit $M_a$ obtains base station information (channel information of the base station wireless apparatus A in this example) from the storage unit $M_f$, changes the oscillating frequency of the PLL unit $M_b$ so as to receive a signal from a transmission channel of the base station wireless apparatus A, and prepares the received-data analyzing unit $M_c$ so that the received-data analyzing unit $M_c$ analyzes received-data.

The receiving unit $M_a$ receives data from the transmission channel of the base station wireless apparatus A. Initially, RCCH busy (1)a is demodulated. The received-data analyzing unit $M_c$ analyzes the received the RCCH busy data (1)a. Because the RCCH busy data (1)a shows that the destination of this frame is not the mobile wireless apparatus M, the received-data analyzing unit $M_c$ causes the base station selecting unit $M_e$ to select another base station wireless apparatus. The base station selecting apparatus $M_e$ obtains the base station information of other base station wireless apparatuses (the base station wireless apparatus B in this example) from the storage unit $M_f$. In the same way as in the case in which the base station wireless apparatus A is selected, the base station selecting unit $M_e$ controls the PLL unit $M_b$ and the received-data analyzing unit $M_c$. The receiving unit $M_a$ can receive and demodulate the signal from the transmission channel of the base station wireless apparatus B after the locked time from when the PLL unit $M_b$ changes the oscillating frequency thereof. The received-data analyzing unit $M_c$ analyzes the received RCCH data (1)b. When the RCCH data (1)b includes the mobile wireless apparatus M as the destination of the frame and when the CCCH data is followed by the RCCH data (1)b, the data processing $M_d$ extracts the base station information of the neighboring bade station wireless apparatuses from CCCH data and saves the information in the storage unit $M_f$. Accordingly, the base station information in the storage unit $M_f$ is updated.

Operations of each component of the mobile wireless apparatus M are the same as described above. In Fig. 3, subsequently, a case is shown in which a call is required to be requested from the wireless server X to the mobile wireless apparatus M. At this time, because the base station wireless apparatus A is busy transmitting frames to another mobile wireless apparatus, the wireless server X transmits a calling request of the mobile wireless apparatus M to the base station wireless apparatus B. The mobile wireless apparatus M selects a transmission channel of the base station wireless apparatus A and receives RCCH busy data (2)a. However, since it is discovered that the mobile wireless apparatus M is not the destination of the frame, the mobile wireless apparatus M then selects a transmission channel of the base station wireless apparatus B, and receives RCCH data (2)b. Since the RCCH data (2)b shows that the destination of the frame is the mobile wireless apparatus M, the mobile wireless apparatus M acquires the frame, whereby the calling request in the CCCH data of the frame is accepted. The mobile wireless apparatus M responds to the calling request. The same processes as described above follow.

In similar way, when transmission must be performed from the mobile wireless apparatus M, a base station wireless apparatus having an available channel can be selected.

In the description referring to Figs. 2 and 3, for the sake of simplicity, only two base station wireless apparatuses are provided. However, more base station wireless apparatuses may be provided, and by sequentially scanning transmission channels of each base station wireless apparatus based on the base station information, a base station wireless apparatus having an available channel can be selected. When the mobile wireless apparatus is located in the overlapped communication area of two base station wireless apparatuses, as long as the condition

( CCCH time or UPCH time) $\geq$ (locked time of the PLL unit $\times$ 2 + UW + RCCH transmission (or receiving) time)

holds, it is possible to sequentially scan each transmission channel of base station wireless apparatuses. As one example, as long as the locked time of PLL unit is not more than 10 ms and the time cycle of one frame is 40 ms (UW + RCCH time is 10 ms, CCH or UPCH time is 30 ms), it is possible to, during the time cycle of one frame, receive in turn RCCH data from transmission channels of other base station wireless apparatuses until once again the transmission channel of the initial base station wireless apparatuses is received. Fig. 2 shows a case in which the single wireless server is connected to multiple base station wireless apparatuses. In this case, registration and authentication of the mobile wireless apparatus to the wireless senor are required only once. Accordingly, there is no need to repeat the registration and authentication process whenever the mobile wireless apparatus changes the base station wireless apparatus wirelessly communicated therewith. The registration and authentication process are described in detail below.

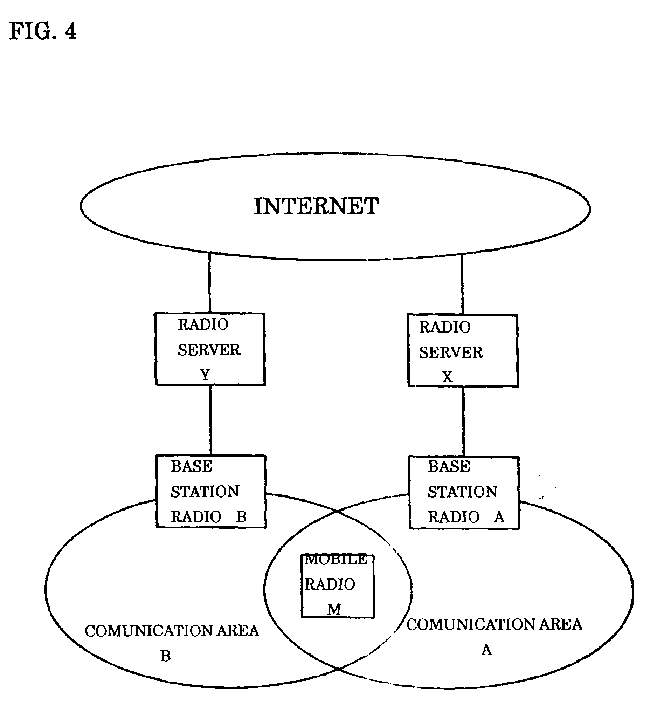

Fig. 4 shows a case in which the mobile wireless apparatus M is located in an overlapping region of the communication areas A, B, etc for multiple base station wireless apparatuses A, B, etc, respectively, (for the sake of simplicity, only base station wireless apparatuses A and B are shown). Furthermore, base station wireless apparatuses A and B are connected to wireless servers X and Y, respectively.

In Fig. 4, a data flow between signals from two base station wireless apparatuses A and B and the mobile wireless apparatus is the same as shown in Fig. 3. Since wireless servers X and Y, which are connected to base station wireless apparatuses A and B, respectively, are different, when a terminal device of the mobile wireless apparatus M, which is already registered with and authenticated by the wireless server X, is switched to the different wireless server Y, the terminal device is registered with and is authenticated by the wireless server Y via the base station wireless apparatus B. After the completion of registration and authentication of the mobile wireless apparatus M, the wireless server Y informs the wireless server X that the terminal device, connected to the mobile wireless apparatus M, is registered with the wireless server Y. When the wireless server X receives this message, the registration of the terminal device is deleted. Wireless servers X and Y have information such as locations of base station wireless apparatuses under the control thereof, and locations of base station wireless apparatuses which are out of the control thereof and whose communication areas are overlapped with those of the base station wireless apparatuses thereof. It is possible that each wireless server obtains information about transmission timing of signals in the transmission channels of base station wireless apparatuses from other wireless servers. In addition, wireless servers X and Y control transmission timing of signals in the transmission channels of base station wireless apparatuses A and B by individually synchronizing with, for example, time information contained in, a signal transmitted from the "Global Positioning System" (GPS). Hereinbefore, the mobile wireless apparatus and the wireless server according to one embodiment of the present invention have been described in detail.

Now, a wireless communication apparatus employing the mobile wireless apparatus and the wireless server of the present invention is described with reference to the figures.

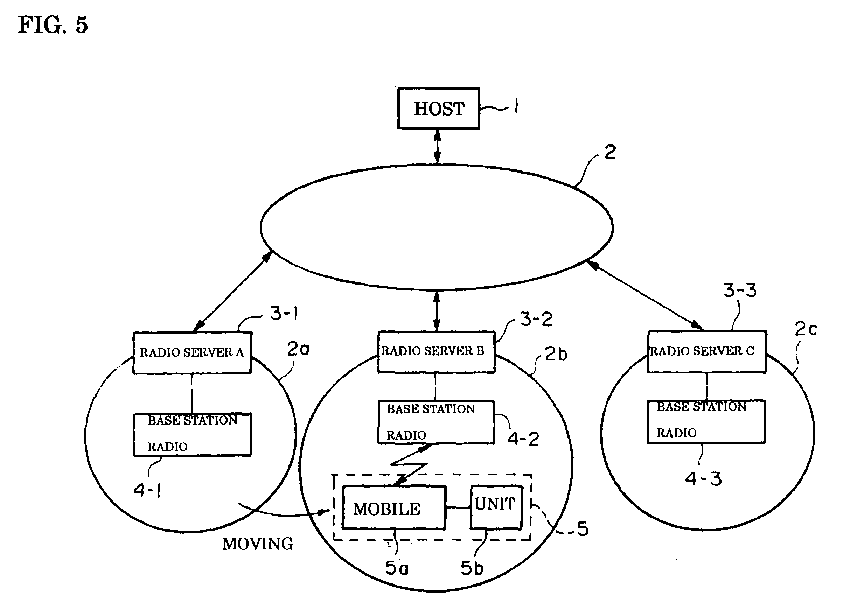

Fig. 5 shows a block diagram of the wireless communication apparatus. Numeral 1 indicates a host server; numeral 2 indicates a network connected to the host server 1; numerals 3-n (3-1, 3-2, etc) indicate wireless servers connected to the network 2; numerals 2a, 2b, and 2c indicate sub-networks built under the network 2; numerals 4-n (4-1, 4-2, etc) indicate base station wireless apparatuses, a plurality of which is connected to a single wireless server (for the sake of simplicity, only the single base station wireless apparatus 3-n and the corresponding single wireless server 4-n are shown); and numeral 5 indicates a terminal device, which is wirelessly communicated with the wireless server 3-n, and which includes a mobile wireless apparatus (hereinafter referred to as mobile apparatus) 5a wirelessly communicated with the base station apparatus, and a computer terminal (hereinafter referred to as terminal) 5b connected to the mobile apparatus 5a.

The host server 1 may wirelessly communicate with a terminal, or may not have the ability to wirelessly communicate.

The terminal device 5 has, as the home server, one of the wireless servers connected to the network 2. In Fig. 5, the wireless server C 3-3 is the home server of the terminal 5.

As described above, wireless servers X and Y, and base station wireless apparatuses A and B and the mobile wireless apparatus M correspond to any two of wireless servers 3-n (n= 1, 2,...), any two of base station wireless apparatuses 4-n (n=1, 2,...), and the mobile wireless 5a, respectively.

Operations of the wireless communication apparatus according to the embodiment of the present invention, are described with reference to Figs. 5 to 10.

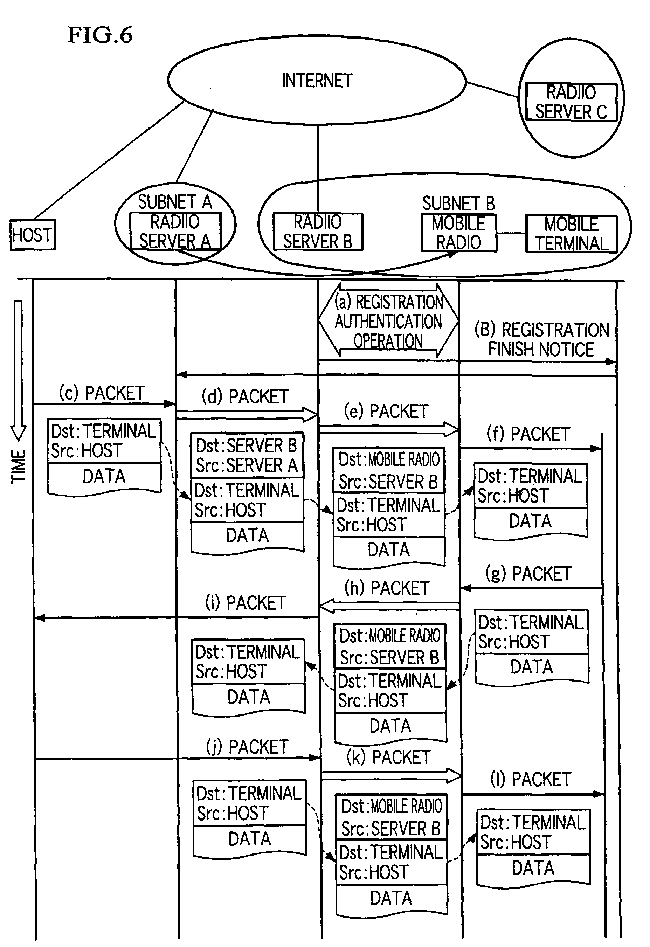

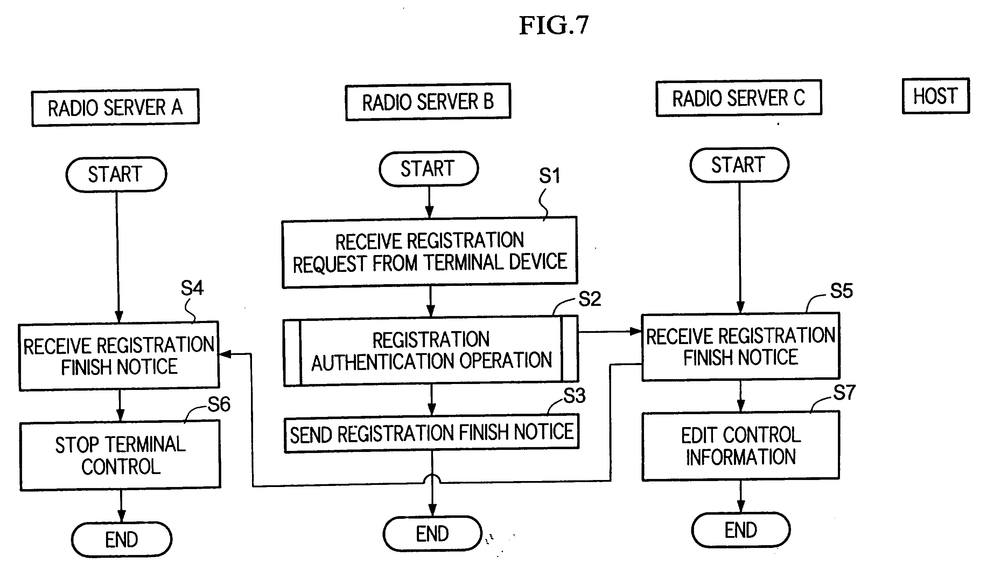

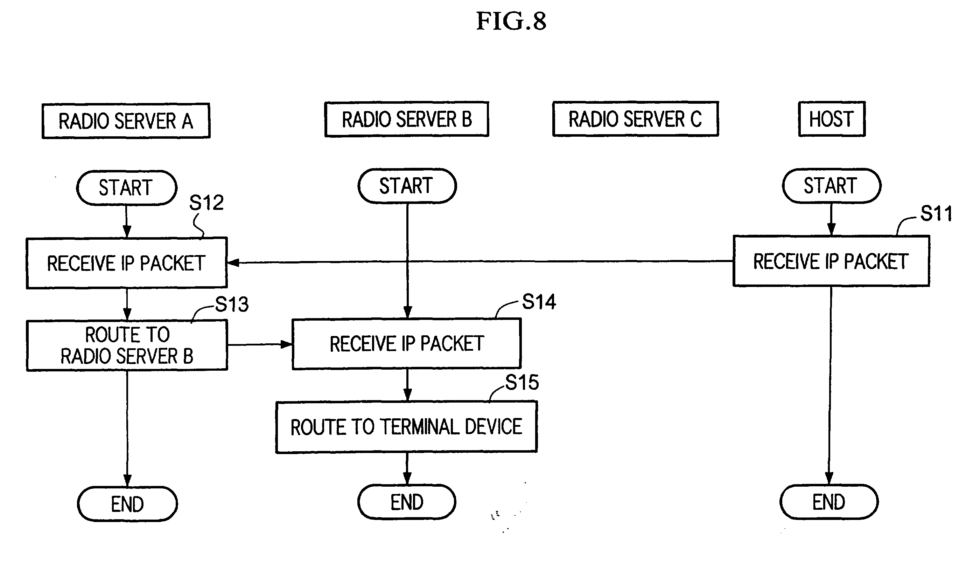

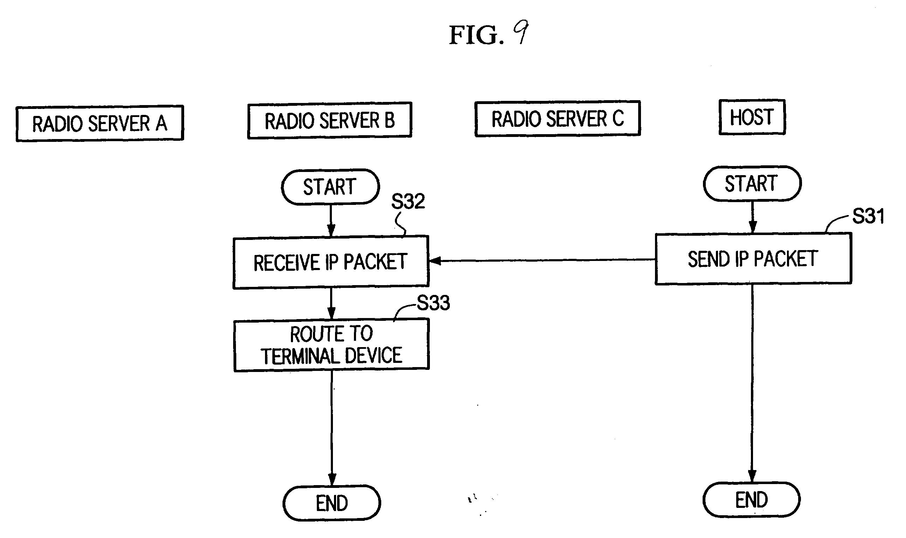

Fig. 6 shows operations of the wireless communication apparatus in accordance with changes in time. In Fig. 6. "Dst" indicates the destination of a packet and "Src" indicates the source of the packet. Figs. 7 to 10 are flow charts showing procedures of the wireless communication apparatus.

Here, the terminal device 5 is assumed to have the wireless server C 3-3 as the home server, and to be currently kept under the control of the wireless senor A 3-1.

A case in which the terminal device 5 moves from a sub-network 2a responsible for the wireless server A 3-1 to a sub-network 2b responsible for the wireless server B 3-2 is described.

The terminal device 5 requests registration-authentication of a terminal and issue of an IP address (represented by (a) in Fig. 6, and step S1 in Fig. 7) from the wireless server B 3-2 . The wireless server B 3-2 authenticates for access of the terminal device 5 thereto and issues the IP address (represented by (a) in Fig. 6, and step S2 in Fig. 7), thereby enabling the terminal device 5 to be under the control of the wireless server B 3-2. The registration-authenticating process and the IP address issuing process are described below.

The wireless server B 3-2 informs the wireless server C 3-3 (the home server) that the authentication-registration process of the terminal device 5 is completed due to the management transition thereof from the wireless server A 3-1 to the wireless server B 3-2 (represented by (b) in Fig. 6, and step S3 in Fig. 7).

In accordance with the above information about the registration completion from the wireless server B 3-2, the wireless server C 3-3 (home server) informs the wireless server A 3-1 that the terminal device 5 is moved to the sub-network 2b and is kept under the control of the wireless server B 3-2 (step S5 in Fig. 7). As a result of this, the wireless server A 3-1 receives the above information of the registration completion from the wireless server C 3-3 (home server) (step S4 in Fig. 7) and stops the management of the terminal device 5 (step S6 in Fig. 7). The wireless server C 3-3 (home server) records that the terminal device 5 is kept under control of the wireless server B 3-2, and updates the management information thereof (step S7 in Fig. 7).

The reason that the transition of the terminal device 5 is informed to the wireless server A 3-1 via the wireless server C 3-3 (home server) is to have the wireless server A 3-1 understand which wireless server currently manages the terminal device 5.

Such operations enable the terminal device 5 to be kept under the control of another wireless server.

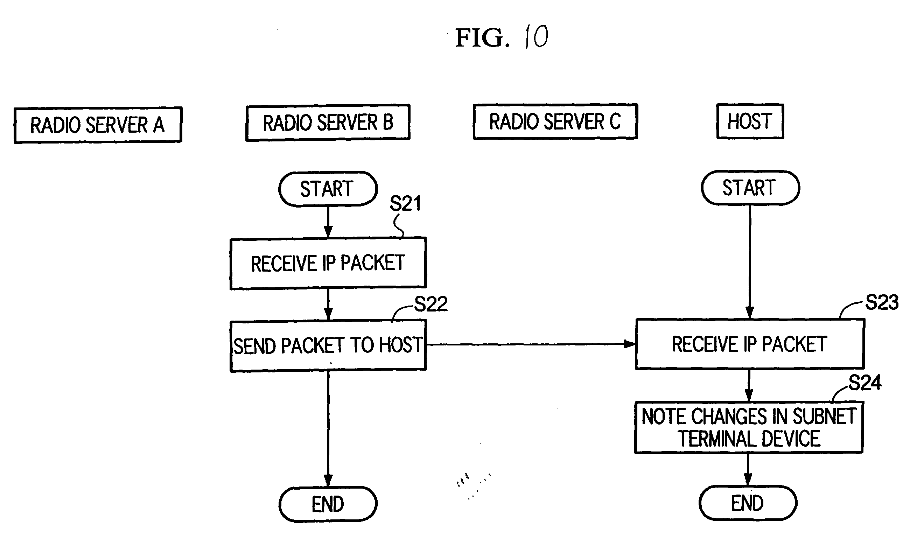

With reference to Figs. 6 and 8, operations are described in which the host server 1 transmits a packet to the terminal device 5.

The host server 1 transmits an IP packet through the network 2 to the terminal device 5 (step S11 in Fig. 8). Because the host server 1 does not know that the terminal device 5 is kept under the control of the wireless server B 3-2, the host server 1 transmits the packet to the previous wireless server A 3-1 of the terminal device 5 (represented by (c) in Fig. 6).

The wireless server A 3-1 receives the packet (step S12 in Fig. 8) and transmits the packet by routing to the wireless server B 3-2 (represented by (d) in Fig. 6, and step S13 in Fig. 8). The wireless server B 3-2 receives the packet (step S14 in Fig. 8), and transmits the packet (represented by (e) in Fig. 6) by routing to the terminal apparatus 5a of the terminal device 5 under the control thereof (step S15 in Fig. 8). Finally, the packet is transmitted to the terminal 5b (represented by (f) in Fig. 6).

Therefore, the terminal device 5 can receive the packet transmitted from the host server 1.

Operations are described, with reference to Figs. 6, 9, and 10, in which the terminal device 5 transmits a packet to the host server 1.

The terminal 5b transmits the packet to the mobile apparatus 5a (represented by (g) in Fig. 6). The mobile apparatus 5a transmits the packet received via the wireless server 3 B-2 (represented by (h) in Fig. 6).

The wireless server B 3-2 receives the packet (step S21 in Fig. 9), transmits the packet received from the terminal device 5 to the host server 1 by routing to the host server 1 (represented by (i) in Fig. 6, and step S22 in Fig. 9). The host server 1 receives the packet (step S23 in Fig. 9). Because the host server 1 can discover from the source address of the packet that the terminal device 5 is under the control of the wireless server B 3-2 (step S24 in Fig. 9), the terminal device 5 transmits the packet directly to the wireless server B 3-2 thereafter.

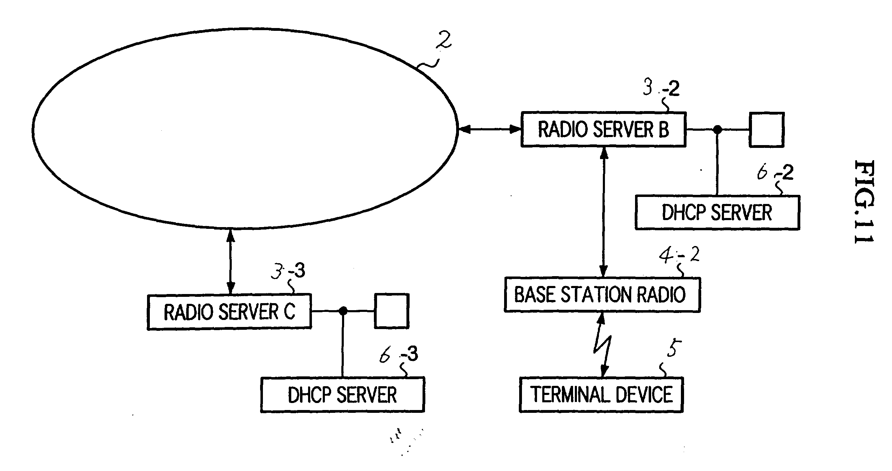

Operations are described below in which the host server 1 transmits a packet to the wireless server B3-2. The host server 1 transmits the packet to the wireless server B3-2 (represented by (j) in Fig. 6, and step S31 in Fig. 10).

The wireless server B 3-2 receives the packet (step S32 in Fig. 10), and transmits the packet to the mobile apparatus 5a (represented by (k) in Fig. 6) by routing to the terminal device 5 (step S33 in Fig. 10). Finally, this packet is transmitted to the terminal device 5 (represented by (1) in Fig. 6).

Thus, when the packet is exchanged between a server and the terminal device 5, the packet is allowed to be forwarded. Accordingly, because, whenever the terminal device 5 moves to another communication area, there is no need to inform all wireless servers of the transition of the terminal device 5, heavy communication traffic can be prevented from occurring.

The operation of issuing an IP address is described with reference to Fig. 11.

When the terminal device 5 moves to the communication area of the wireless server B 3-2, the terminal device 5 requests the wireless server B 3-2 to issue the IP address.

The wireless server B 3-2 identifies the home wireless server of the terminal device 5, which is the wireless server C 3-3 in this case, then the wireless server B 3-2 requests the wireless server C 3-3 (home server) to issue the IP address.

The wireless server C 3-3 (home server) requests a "Dynamic Host Configuration Protocol" (DHCP) server 6-3, which serves to issue an IP address, and which is connected to the wireless server C 3-3. The DHCP server 6-3 issues a currently available IP address in response to the request, and informs the wireless server C 3-3 of the issued IP address.

The wireless server C 3-3 transmits the issued IP address to the terminal device 5 via the wireless server B 3-2.

Additionally, when the wireless server B3-2 is the home server of the terminal device 5, a DHCP server 6-2, which is connected to the wireless server B 3-2, may issue an IP address.

Because these operations enable the terminal device 5 under the control of the wireless server B 3-2 to use the IP address the wireless server C 3-3 issues, it seems as though the terminal device 5 was kept under the control of the wireless server while the packet can be transmitted to the terminal device 5 via the wireless server B 3-2.

When the terminal device 5 requests a wireless server, which the terminal device 5 currently tries to access, to issue an IP address, even though the wireless server may not be a home wireless server, the home wireless server can issue the IP address via the wireless server. Accordingly, the terminal device 5 can access another wireless server without changing a configuration of the IP address thereof.

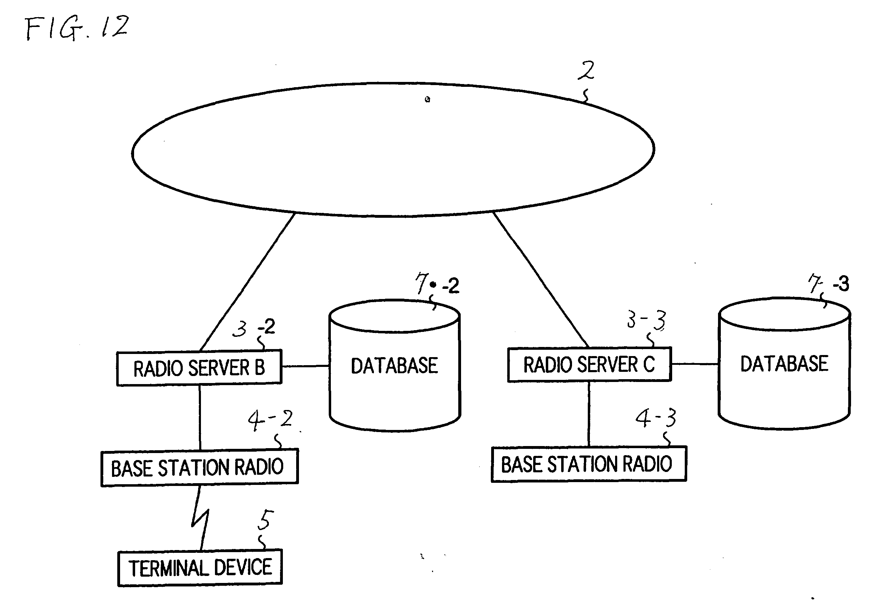

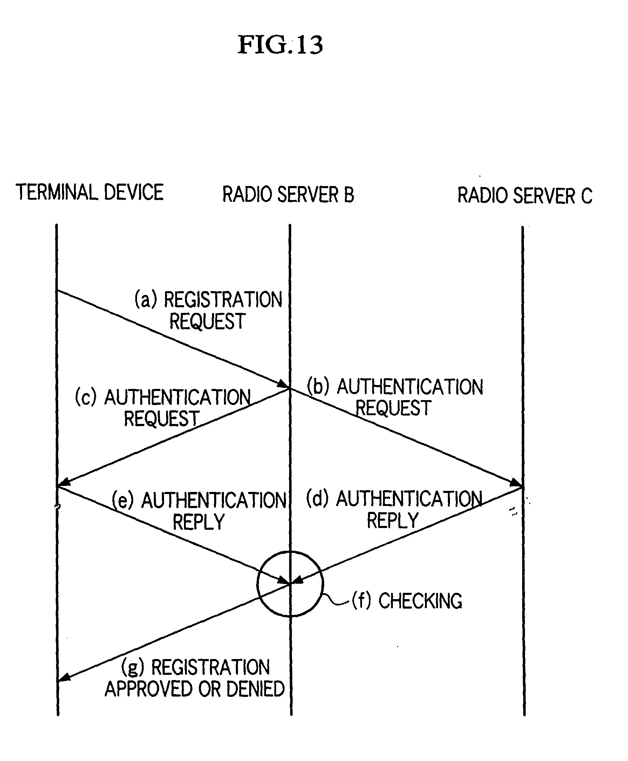

Operations of registration-authentication are described below with reference to Figs. 12 and 13.

The terminal device 5 requests the wireless server B 3-2 to register with the wireless server B 3-2 (represented by (a) in Fig. 13), then transmits an identification number thereof to the wireless server B 3-2.

The wireless server B 3-2 queries whether or not the authentication data of the requesting terminal device 5 exists in a database 7-2 connected to the wireless server B 3-2. When the authentication data does not exist in the database 7-2, it is determined that the wireless server B 3-2 is not the home wireless server of the terminal device 5. The wireless server B 3-2 transmits an authentication request to the home server (the wireless server C 3-3 in this case) of the terminal device 5 which is obtained based on the received identification number (represented by (b) in Fig. 13).

A random value which the wireless server B 3-2 qenerates, and the identification number, which the terminal device 5 requests to be registered, are also transmitted to the home server. Moreover, the random value is transmitted to the terminal device 5 (represented by (c) in Fig. 13).

The wireless server C 3-3 (home server) receives the authentication request, then performs an authentication processing computation, using the received random value and identification number.

The wireless server C 3-3 returns the result of the computation to the wireless server B 3-2 (represented by (d) in Fig. 13).

The terminal device 5 receives the random number from the wireless server B 3-2, then performs authentication process computations, using the received random value, thereby returning the result of the computation to the wireless server B 3-2 (represented by (e) in Fig. 13).

The wireless server B 3-2 collates the result of the authentication process received from the wireless server C 3-3 with that from the terminal device 5 (represented by (f) in Fig. 13). If the collation of these results finds their identity, the registration-request is recognized (represented by (g) in Fig. 13); otherwise, the registration request is refused as an illegal registration request.

On the other hand, when the authentication data exists in the database 7-2, because the wireless server B 3-2 is the home wireless server of the terminal device 5, the authentication process requires only the "registration-request operation" (represented by (a) in Fig. 13), the "authentication-request operation" (represented by (c) in Fig. 13), the "authentication-response operation" (represented by (e) in Fig. 13), and the "registration-acknowledgement operation" (represented by (g) in Fig. 13).

As shown above, registration-authentication of a terminal device 5 can be performed even though the terminal device is not under the control of the home server.

The use of the above described wireless communication apparatus enables a mobile terminal device to maintain communication between the wireless communication apparatus and the mobile terminal device after the transition of the mobile terminal device, which can be applied to message communication (electronic mail, net news, file transfer protocol (FTP), voice mail, WEB distribution, Computer Telephony Integration (CTI), telemetering, broadcast communication, Intelligent Transport System (ITS), and the like). In addition, the wireless communication apparatus can be applied to a push-type communication using a routing function.

One embodiment of the wireless communication apparatus employing the base station wireless apparatus and the wireless server according to the present invention is described. However the present invention is not limited to the embodiment.

The present invention may utilize a network by using LAN or dial up connection, apart from the Internet and Intranet.

Furthermore, mobile wireless apparatus may select a base station by storing a base station selecting program for realizing the mobile wireless apparatus of the present invention in a computer-readable storage medium whereby the program is loaded from this medium into a computer system and executed.

That is, functions, such as a received-data analyzing function for analyzing received-data transmitted from a base station wireless apparatus which receives data; a function for extracting a base station information from the received-data and storing: and a function for changing a process using the function for analyzing the received-data, and changing the oscillating frequency of the PLL unit, in accordance with the base station wireless apparatus which receives data, based on the base station information, are implemented in the computer system by the base station selecting program.

In this case, the "computer system" means an operating system (OS), and hardware such as peripheral devices. The "computer-readable storage medium" means a removable medium, such as a floppy disk, a magneto-optical disk, a read-only-memory (ROM), and CD-ROM; and a storage device, such as a hard disk installed in the computer system. Furthermore, the "computer-readable storage medium" may be a communication link which dynamically stores a program for a short period. In addition, the "computer-readable storage medium" may be volatile memories in a client computer and a server computer of the computer system which store programs for a certain period of time when programs are transmitted through a communication link such as a telephone line or a network, e.g. the Internet.

The above program may realize a part of the above described functions. Alternatively, the above program and already-existing programs in the computer system may collaborate to realize the above described functions.

The embodiments of the present invention were described in detail with reference to the figures. However, an actual construction is not limited to those of the embodiments of the present invention. As long as it is considered to be within the scope of the invention, modifications and variations are possible.

## Claims

1. A mobile wireless apparatus (M) for establishing a link between a terminal device (5) and the Internet by wirelessly communicating with a base station wireless apparatus (A,B) of a wireless communication apparatus having at least one wireless server (X,Y) connected to the Internet and said base station wireless apparatus (A,B) connected to the wireless server (X,Y) for performing wireless communication, said mobile wireless apparatus (M) characterized in that

under a condition in which said mobile wireless apparatus (M) can wirelessly communicate with multiple base station wireless apparatuses (A,B), when said base station wireless apparatus (A,B), which communicated with said mobile wireless apparatus (M), currently communicates with another mobile wireless apparatus, said mobile wireless apparatus (M) wirelessly communicates with another base station wireless apparatus (A,B) obtained by selecting from among a plurality of other base station apparatuses (A,B), which are located in neighboring communication areas of said base station wireless apparatus (A,B) and which have available communication links.

**2.** A mobile wireless apparatus (M) according to Claim 1, characterized in that during idling time thereof, base station information of the neighboring other bass station wireless apparatuses (A,B) is obtained and stored from packets transmitted from said plurality of other base station wireless apparatuses (A,B), thereby selecting the other base station wireless apparatus (A,B) based on said base station information.

**3.** A mobile wireless apparatus (M) according to Claim 2, characterized by further comprising;

a receiving unit ($M_a$) for receiving a wireless signal and outputting the received-data;
a PLL unit ($M_b$), connected to said receiving unit ($M_a$), for demodulating said wireless signal;
a storage unit ($M_f$) storing base station information about base station wireless apparatuses (A,B);
received-data analyzing means ($M_c$) for analyzing said received-data;
data processing means ($M_d$) for extracting said base station information from the analyzed received-data and for storing said base station information in said storage unit ($M_f$) ; and
base station selecting means ($M_e$) for synchronously switching settings for said received-data analyzing unit ($M_c$) and said PLL unit ($M_b$) based on the base station information stored in said storage unit ($M_f$).

**4.** A wireless server (X,Y) for a wireless communication apparatus having at least one wireless server (X,Y) connected to the Internet, and a base station wireless apparatus (A,B) which is connected to the wireless server (X,Y) and which wirelessly communicates with a mobile wireless apparatus (M) connected to a terminal device (5), characterized in that said wireless server (X,Y) causes multiple base station wireless apparatuses (A,B), which are connected to said wireless server (X,Y) and, whose communication areas overlap, to synchronously transmit wireless signals having control data at different times.

**5.** A wireless server (X,Y) according to Claim 4, characterized in that when the communication area of the base station wireless apparatus (A,B) connected to said wireless server (X,Y) overlaps with those of base station wireless apparatuses (A,B) connected to other wireless servers (X,Y), said wireless server (X,Y) causes each base station wireless apparatus (A,B) to transmit wireless signals having control data at different times by synchronizing with said other wireless servers (X,Y).

**6.** A computer-readable recording medium containing a base station selecting program for a mobile wireless apparatus (M), characterized in that: the program causing a computer to execute the steps of:

analyzing received-data transmitted from a receiving base station wireless apparatus (A,B);
extracting and storing base station information from said received-data; and
changing a process of analyzing said received-data and the oscillating frequency of a PLL unit ($M_b$) in accordance with the receiving base station wireless apparatus (A,B) based on said base station information.

FIG. 1

M : MOBILE RADIO

Block diagram:

- RECEIVING SECTION (Ma)
- RECEIVED DATA ANALYSIS SECTION (Mc)
- DATA PROCESSING SECTION (Md)
- PLL SECTION (Mb)
- STATION SELECTION SECTION (Me)
- BASE STATION INFORMATION (Mf : MEMORY SECTION)

## FIG. 2

# FIG. 3

SYNCHRONIZING WORD

FIG. 4

INTERNET

RADIO SERVER Y

RADIO SERVER X

BASE STATION RADIO B

BASE STATION RADIO A

MOBILE RADIO M

COMUNICATION AREA B

COMUNICATION AREA A

FIG. 5

## FIG.6

# FIG.7

| RADIO SERVER A | RADIO SERVER B | RADIO SERVER C | HOST |
|---|---|---|---|

EP 1 011 277 A2

**RADIO SERVER A**

( START )

↓

RECEIVE REGISTRATION FINISH NOTICE — S4

↓

STOP TERMINAL CONTROL — S6

↓

( END )

**RADIO SERVER B**

( START )

↓

RECEIVE REGISTRATION REQUEST FROM TERMINAL DEVICE — S1

↓

REGISTRATION AUTHENTICATION OPERATION — S2

↓

SEND REGISTRATION FINISH NOTICE — S3

↓

( END )

**RADIO SERVER C**

( START )

↓

RECEIVE REGISTRATION FINISH NOTICE — S5

↓

EDIT CONTROL INFORMATION — S7

↓

( END )

## FIG.8

| RADIO SERVER A | RADIO SERVER B | RADIO SERVER C | HOST |
|---|---|---|---|

RADIO SERVER A:
- START
- S12 RECEIVE IP PACKET
- S13 ROUTE TO RADIO SERVER B
- END

RADIO SERVER B:
- START
- S14 RECEIVE IP PACKET
- S15 ROUTE TO TERMINAL DEVICE
- END

HOST:
- START
- S11 RECEIVE IP PACKET
- END

EP 1 011 277 A2

# FIG. 9

| RADIO SERVER A | RADIO SERVER B | RADIO SERVER C | HOST |
|---|---|---|---|

```
                    ( START )                          ( START )
                        |                                  |
                        |                                  |
                        ▼            S32                    ▼            S31
              ┌───────────────────┐              ┌───────────────────┐
              │ RECEIVE IP PACKET │ ◄──────────── │  SEND IP PACKET   │
              └───────────────────┘              └───────────────────┘
                        |            S33                    |
                        ▼                                   |
              ┌───────────────────┐                         |
              │     ROUTE TO      │                         |
              │  TERMINAL DEVICE  │                         |
              └───────────────────┘                         |
                        |                                   |
                        ▼                                   ▼
                    ( END )                            ( END )
```

EP 1 011 277 A2

## FIG. 10

| RADIO SERVER A | RADIO SERVER B | RADIO SERVER C | HOST |

```
                      START                              START
                        |                                  |
                        v S21                              |
               ┌─────────────────┐                        |
               │ RECEIVE IP PACKET│                        |
               └─────────────────┘                        |
                        |                                  |
                        v S22                              v S23
               ┌─────────────────┐            ┌─────────────────────┐
               │ SEND PACKET TO HOST├────────►│  RECEIVE IP PACKET   │
               └─────────────────┘            └─────────────────────┘
                        |                                  |
                        |                                  v S24
                        |                      ┌─────────────────────────┐
                        |                      │ NOTE CHANGES IN SUBNET   │
                        |                      │    TERMINAL DEVICE       │
                        |                      └─────────────────────────┘
                        v                                  v
                      END                                END
```

EP 1 011 277 A2

# FIG.11

FIG. 12

2

7-3

DATABASE

3-3
RADIO SERVER C

4-3
BASE STATION RADIO

7-2

DATABASE

3-2
RADIO SERVER B

4-2
BASE STATION RADIO

5
TERMINAL DEVICE

# FIG.13

TERMINAL DEVICE    RADIO SERVER B    RADIO SERVER C

(a) REGISTRATION
REQUEST

(c) AUTHENTICATION
REQUEST

(b) AUTHENTICATION
REQUEST

(e) AUTHENTICATION
REPLY

(d) AUTHENTICATION
REPLY

(f) CHECKING

(g) REGISTRATION
APPROVED OR DENIED